# EUROPÄISCHE PATENTSCHRIFT

(11) **EP 2 146 332 B1**
(45) Veröffentlichungstag und Bekanntmachung des Hinweises auf die Patenterteilung: **19.06.2019**
(21) Anmeldenummer: 09008721.4
(22) Anmeldetag: 03.07.2009
(51) Int. Cl.: G08G 5/02, G08G 5/00, G01S 1/68

(54) **Verfahren zum automatischen Ermitteln einer Landebahn**
Method for automatically detecting a runway
Procédé de détermination automatique d'une bande d'atterrissage

(30) Priorität: 15.07.2008 DE 102008033235
(43) Veröffentlichungstag der Anmeldung: 20.01.2010
(73) Patentinhaber: Airbus Defence and Space GmbH, 82024 Taufkirchen (DE)
(72) Erfinder: Trautenberg, Hans L., Dr., 85521 Ottobrunn (DE)
(74) Vertreter: Schicker, Silvia

(56) Entgegenhaltungen:
- EP-A2- 0 273 326
- US-A- 3 624 598
- US-A- 5 748 136
- US-A- 5 820 080
- US-A1- 2007 129 857

## Beschreibung

Die Erfindung betrifft ein Verfahren zum automatischen Ermitteln einer Landebahn gemäß Anspruch 1.

Es kommt immer wieder vor, dass Flugzeuge die falsche Landebahn an einem Flugplatz anfliegen. Dies kommt nicht nur bei schlechter, sondern auch häufig bei guter Sicht vor. Ab und an kommt es auch vor, dass Flugzeuge zwar die richtige Landebahn anfliegen, allerdings aus der falschen Richtung. Beide Situation, d.h. Anfliegen der falschen Landebahn und Anfliegen der richtigen Landebahn aus der falschen Richtung können zu gefährlichen Situationen, insbesondere bei Flugplätzen mit hohem Luftverkehrsaufkommen führen.

Aus der US2007/0142982A1 ist ein Verfahren zum Ermitteln des Aufsetzpunktes eines Flugzeugs auf der Landebahn bekannt. Der Aufsetzpunkt wird hierbei durch Benutzung von Information bezüglich der Situation im Flugzeug und den Absichten der Besatzung und durch Benutzung von Informationen über die Konfiguration der Landebahn berechnet. Ein Computer an Bord des Flugzeugs korreliert hierzu diese beiden Typen von Informationen, um die Landebahn, auf welcher das Flugzeug landen soll, und insbesondere den Aufsetzpunkt des Flugzeugs darauf zu ermitteln. Das aus der US2007/0142982A1 bekannte Verfahren erlaubt zwar die Bestimmung der korrekten Landebahn, kann aber nicht verhindern, dass ein Flugzeug die Landebahn von der falschen Richtung anfliegt. Dadurch können bestimmte gefährliche Situationen nicht verhindert werden, da bereits ein Luftraum zum Anfliegen der Landebahn vom Flugzeug verwendet werden kann, der für den Anflug auf eine andere Landebahn vorgesehen ist.

Aus der EP0273326A2 ist ein Landehilfesystem für Flugzeuge mit eigenem Bordradar bekannt, bei dem zwei transportable Radarbaken an Anfang und Ende einer vorgesehenen Landebahn aufgestellt werden. Das Bordradar kann Anfragesignale aussenden, die von den Radarbaken empfangen werden und Antwortsignale bei richtiger Adressierung auslösen, die zwar in Frequenz und/oder Kodierung festgelegt sind, sich aber von den Anfragesignalen unterscheiden. Aus einem Vergleich der beiden Antwortsignale der Radarbaken kann die Winkellage eines im Anflug befindlichen Flugzeugs von der virtuellen verlängerten Mittellinie der Landebahn ermittelt werden.

Die US5820080A offenbart ein Landehilfssystem, das ein Positionsbestimmungssystem zur Bestimmung einer lateralen Position eines Flugzeugs in Bezug auf einen Landeanflugpfad, einen Höhenmesser zum Bestimmen einer vertikalen Positionsinformation des Flugzeugs in Bezug auf den Landeanflugpfad und eine grafische Anzeigevorrichtung zum Darstellen der lateralen und vertikalen Position in Bezug auf den Landeanflugpfad aufweist. Das Positionsbestimmungssystem ist insbesondere ein Satelliten-gestütztes Positionsbestimmungssystem wie GPS. Hierdurch soll nach Möglichkeit eine bodengestützte Infrastruktur obsolet werden.

Aufgabe der vorliegenden Erfindung ist es daher, ein Verfahren zum automatischen Ermitteln einer Landebahn vorzuschlagen, das insbesondere zur Vermeidung gefährlicher Situationen im Luftraum beitragen kann.

Diese Aufgabe wird durch ein Verfahren zum automatischen Ermitteln einer Landebahn mit den Merkmalen von Anspruch 1 gelöst. Weitere Ausgestaltungen der Erfindung sind Gegenstand der abhängigen Ansprüche.

Ein wesentlicher Gedanke der Erfindung besteht darin, dass für die Feststellung der wahrscheinlich verwendeten Landebahn nicht mehr die Vorhersage des Aufsetzpunkts eines Flugzeugs auf der Landebahn gemäß der US2007/0142982A1 verwendet wird, sondern die räumliche Abweichung von mehreren Kontrollpunkten entlang des für die Wettersituation und Aufsetzpunktvorhersage angemessenen (und freigegebenen) Landeanflugs. Dadurch kann sichergestellt werden, dass nicht nur die richtige Landebahn verwendet wird, sondern dass auch auf dem richtigen Weg zur Landebahn geflogen wird. Dies ermöglicht eine weitere Verbesserung der Sicherheit beim Landeanflug insbesondere bei verkehrsreichen Flughäfen.

Die Erfindung betrifft nun gemäß einer Ausführungsform ein Verfahren zum automatischen Ermitteln einer Landebahn mit den folgenden Schritten:
Ermitteln von einer Landebahn zugeordneten Kontrollpunkten entlang eines Landeanflugs eines Flugzeugs,
Ermitteln der räumlichen Abweichung des Flugzeugs von den ermittelten Kontrollpunkten und
Ermitteln einer geeigneten Landebahn unter Berücksichtigung der ermittelten räumlichen Abweichung. Durch das Ermitteln der Kontrollpunkte und der räumlichen Abweichung des Flugzeugs davon kann die Lage des Flugzeugs in Bezug zu einer Landebahn, der die Kontrollpunkte zugeordnet sind, automatisch ermittelt werden. Die Kontrollpunkte legen hierbei den richtigen Anflugweg einer Landebahn fest. Dies ermöglicht wiederum die automatische Ermittlung einer geeigneten Landebahn, da schnell festgestellt werden kann, wie das Flugzeug zur Landebahn liegt, insbesondere von welcher Richtung es die Landebahn anfliegt. Unter einer geeigneten Landebahn ist hierbei die eine von der richtigen Richtung aus angeflogene Landebahn zu verstehen.

Das Ermitteln der räumlichen Abweichung des Flugzeugs von den ermittelten Kontrollpunkten kann gemäß einer Ausführungsform der Erfindung das Beurteilen des Treffens der Kontrollpunkte umfassen, wobei für die Beurteilung des Treffens eines Kontrollpunkts ein oder mehrere der folgenden Parameter verwendet werden: Ort, Geschwindigkeit, Gleitwinkel und/oder Sinkgeschwindigkeit des Flugzeugs. Jedem Kontrollpunkt kann ein bestimmter Ort in Form von Koordinaten im dreidimensionalen Raum zugeordnet sein. Die Genauigkeit des Treffens eines Kontrollpunkts kann dann durch Vergleich der aktuellen Flugzeugkoordinaten mit den dem Kontrollpunkt zugeordneten Koordinaten festgestellt werden. Einem Kontrollpunkt können ferner weitere Parameter wie eine optimale Flugzeuggeschwindigkeit, ein optimaler Gleitwinkel und eine optimale Sinkgeschwindigkeit zugeordnet sein. All diese Parameter können ebenfalls mit den aktuellen Flugdaten des Flugzeugs verglichen werden, um festzustellen, wie genau ein Kontrollpunkt von einem anfliegenden Flugzeug "getroffen" wurden.

Gemäß einer Ausführungsform der Erfindung können die Kontrollpunkte mit Verringerung des Abstands zu einer Landebahn in immer kürzeren Abständen gesetzt sein und das Beurteilen des Treffens der Kontrollpunkte mit einer größeren Genauigkeit durchgeführt werden, je mehr sich der Abstand zur Landebahn verringert. Dadurch kann eine Ermittlung einer geeigneten Landebahn vor allem in unmittelbarer Nähe zur Landebahn intensiviert werden, um in dieser kritischen und unfallgefährdeten Zone möglichst sicher feststellen zu können, ob die richtige Landebahn von der richtigen Richtung angeflogen wird.

Das Ermitteln einer geeigneten Landebahn unter Berücksichtigung der ermittelten räumlichen Abweichung kann ferner gemäß einer Ausführungsform der Erfindung das Auswerten von dreidimensional in einer Datenbank abgespeicherten Landeanflugwegen und davon abhängig das Auswählen einer geeigneten Landebahn umfassen. Beispielsweise kann anhand der ermittelten räumlichen Abweichung ein geeigneter, in der Datenbank abgespeicherter Landeanflugweg ermittelt und auf einem Display einem Piloten angezeigt werden, wodurch die Ermittlung einer geeigneten Landebahn für den Piloten wesentlich vereinfacht werden kann.

Weiterhin können gemäß einer Ausführungsform der Erfindung beim Auswählen einer geeigneten Landebahn ferner Benutzereingaben berücksichtigt werden. Beispielsweise können verschiedene Landebahnen, die für ein im Landeanflug befindliches Flugzeug geeignet sind, zur Auswahl durch den Piloten angeboten werden. Der Pilot kann dann eine Landebahn auswählen.

Die Erfindung betrifft außerdem in einer Ausführungsform ein Computer-Programm nach Anspruch 6 zur Durchführung des Verfahrens nach der Erfindung.

Eine weitere Ausführungsform der Erfindung sieht ein Computer-Programm-Produkt vor, das einen maschinenlesbaren Programmträger umfasst, auf dem ein Computer-Programm gemäß der Erfindung in der Form von elektronisch und/oder optischen lesbaren Steuersignalen gespeichert ist.

Schließlich betrifft die Erfindung eine Vorrichtung nach Anspruch 8 zum automatischen Ermitteln einer Landebahn, die zum Ausführen eines Verfahrens nach der Erfindung und wie oben erläutert eingerichtet und zum Betrieb in einem Flugzeug ausgebildet ist. Die Vorrichtung kann beispielsweise als eigenständige Einheit zum Einsatz im Cockpit eines Flugzeugs ausgebildet sein. Die Einheit kann beispielsweise als mobiles Gerät ausgebildet sein, denkbar ist ein spezieller Computer, das bequem vom Flugpersonal im Flugzeug mitgeführt werden kann. Alternativ kann die Vorrichtung auch fest im Cockpit eines Flugzeugs installiert sein, um so eine verbesserte Sicherheit insbesondere für den kritischen Landeanflug zu gewährleisten.

Erfindungsgemäß ist die Vorrichtung zum Empfangen von Signalen von Kontrollpunkten ausgebildet, beispielsweise entsprechende Empfangsmittel wie optische oder Funk-Empfänger für entsprechende Signale der Kontrollpunkte aufweisen.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in:
- Fig. 1: eine Anflugsituation von Landebahnen durch Flugzeuge, wobei den Landebahnen Kontrollpunkte gemäß der Erfindung zugeordnet sind; und
- Fig. 2: ein Flussdiagramm eines Verfahrens zum automatischen Ermitteln einer Landebahn gemäß einer Ausführungsform der Erfindung.

Im Folgenden können gleiche und/oder funktional gleiche Elemente mit den gleichen Bezugszeichen versehen sein.

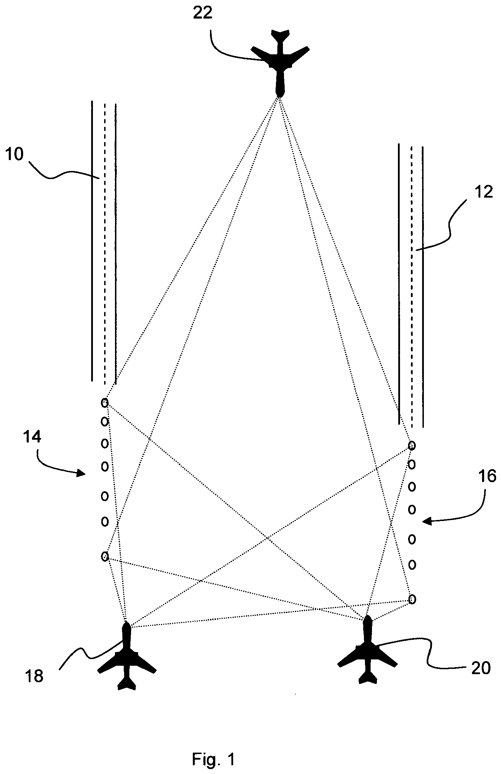

In Fig. 1 ist von oben eine Situation dargestellt, bei der zwei nebeneinander nahezu parallel verlaufende Landebahnen 10 und 12 eines Flughafens von verschiedenen Flugzeugen 18, 20 und 22 aus unterschiedlichen Richtungen angeflogen werden. Den beiden Landebahnen sind jeweils Kontrollpunkte 14 und 16 zugeordnet. Die Kontrollpunkte 14 und 16 verlängern im Prinzip die Landebahnen 10 bzw. 12 und sind in Abständen untereinander auf die Landebahnen 10 und 12 verlängernden Geraden derart angeordnet, dass der Abstand der Kontrollpunkte mit geringer werdenden Abstand zur Landebahn ebenfalls geringer wird, wodurch ein eine Landebahn anfliegendes Flugzeug mit geringerem Abstand zur Landebahn immer genauer seine räumliche Abweichung von der Landebahn bzw. vom Anflugweg auf die Landebahn feststellen kann.

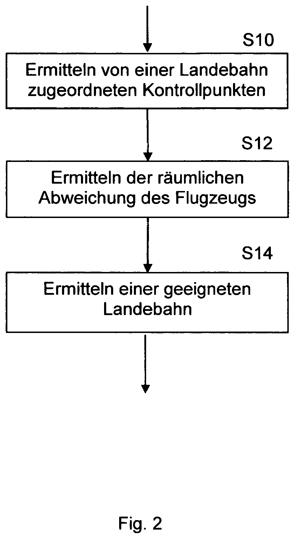

In Fig. 2 sind die wesentlichen Schritte eines Verfahrens zum automatischen Ermitteln einer Landebahn skizziert.

Zunächst wird im Schritt S10 die einer Landebahn 10 oder 12 zugeordneten Kontrollpunkte 14 bzw. 16 entlang eines Landeanflugs eines Flugzeugs 18 bzw. 20 bzw. 22 ermittelt. Die Kontrollpunkte 14 und 16 sind als Funksignalsender ausgebildet, die Funksignale kontinuierlich zur Identifikation aussenden (angedeutet durch die gestrichelten Linien). Die Kontrollpunkte können auch optische Signale zur Identifikation aussenden. Wesentlich ist, dass ein anfliegendes Flugzeug 18, 20 und 22 die Kontrollpunkte schnell und sicher ermitteln kann.

Im nächsten Schritt S12 wird anhand der ermittelten Kontrollpunkte ermittelt, wieweit das entsprechende Flugzeug von den Kontrollpunkten entfernt ist, d.h. wie groß die räumliche Abweichung des Flugzeugs von den Kontrollpunkten ist. Das Ermitteln der räumlichen Abweichung kann beispielsweise dadurch erfolgen, dass ein Signal eines Kontrollpunkts dessen Koordinaten im Raum enthält und ein das Signal empfangende Flugzeug anhand seiner Koordinaten seine räumliche Abweichung vom Kontrollpunkt ermittelt. Das Ermitteln der räumlichen Abweichung kann auch das Beurteilen des Treffens der Kontrollpunkte umfassen. Für die Beurteilung des Treffens eines Kontrollpunkts können Ort, Geschwindigkeit, Gleitwinkel und/oder Sinkgeschwindigkeit des Flugzeugs als Parameter verwendet werden.

Schließlich wird im Schritt S14 unter Berücksichtigung der ermittelten räumlichen Abweichung eines Flugzeugs von ermittelten Kontrollpunkten eine geeignete Landebahn zum Landen des Flugzeugs ermittelt. In der in Fig. 1 dargestellten Situation wird beispielsweise anhand der geringen räumlichen Abweichung des Flugzeugs 18 von den Kontrollpunkten 14 der Landebahn 10 als eine geeignete Landebahn ermittelt. Analog wird für das Flugzeug 20 die Landebahn 12 als geeignete Landebahn ermittelt. Schließlich wird für das Flugzeug 22, das die Landebahnen von der falschen Richtung anfliegt, aufgrund der großen räumlichen Abweichung von den Kontrollpunkten 14 und 16 keine der beiden Landebahnen 10 und 12 als geeignet ermittelt. Der Pilot des Flugzeugs 22 weiß dadurch, dass keine der Landebahnen 10 und 12 für seinen Landeanflug geeignet ist und er die Landebahnen von der falschen Richtung anfliegt. Dies kann beispielsweise optisch oder akustisch dem Piloten im Cockpit des Flugzeugs 22 signalisiert werden.

Bei der Ermittlung einer geeigneten Landebahn können auch dreidimensional in einer Datenbank abgespeicherte Landeanflugwege der Landebahnen 10 und 12 ausgewertet werden. Beispielsweise kann für das Flugzeug 18 sowohl die räumliche Abweichung von den Kontrollpunkten 14 und 16 ermittelt werden.

Anschließend können im Flugzeug aus der Datenbank die dreidimensional abgespeicherten Landeanflugwege für jede der beiden Landebahnen 10 und 12 gelesen werden. Schließlich kann anhand dieser genauen Daten der Landeanflugwege die Landebahn 10 als geeignete Landebahn für das Flugzeug 18 ermittelt werden. Die zusätzliche Auswertung der dreidimensional gespeicherten Landeanflugwege ermöglicht eine noch bessere Ermittlung einer geeigneten Landebahn als eine Ermittlung lediglich unter Berücksichtigung der ermittelten räumlichen Abweichung.

Die Erfindung ermöglicht das Ermitteln einer geeigneten Landebahn durch ein Flugzeug, das heißt, ob die Landebahn aus der richtigen Richtung angeflogen wird. Im Gegensatz hierzu ermöglicht das aus der US2007/0142982A1 geeignete Verfahren zwar das Sicherstellen, dass von einem Flugzeug die richtige Landebahn verwendet wird, indem der Aufsetzpunkt auf der Landebahn als Entscheidungskriterium für eine Landebahn gewählt wird, nicht aber das Sicherstellen, dass die Landebahn von der richtigen Richtung aus angeflogen wird.

### Bezugszeichen

- 10, 12: Landebahn
- 14, 16: Kontrollpunkte der Landebahn 10 bzw. 12
- 18, 20, 22: Flugzeug
- S10-S14:

## Patentansprüche

1. Verfahren zum automatischen Ermitteln einer Landebahn (10, 12) in einem Flugzeug mit den folgenden Schritten:
Ermitteln von mehreren jeweils einer Landebahn (10, 12) zugeordneten und als Signalsender ausgebildeten Kontrollpunkten (14, 16) entlang eines Landeanflugs des Flugzeugs (18, 20, 22; S10) durch Empfangen von Signalen, die von den Kontrollpunkten zur Identifikation ausgesendet werden und den richtigen Anflugweg der Landebahn festlegen,
Ermitteln der räumlichen Abweichung des Flugzeugs (18, 20, 22) von den ermittelten Kontrollpunkten (14, 16; S12) dadurch, dass die von den Kontrollpunkten ausgesandten Signale die Koordinaten der Kontrollpunkte im Raum enthalten und anhand der eigenen Koordinaten und der empfangenen Koordinaten der Kontrollpunkte die räumliche Abweichung ermittelt wird, und
Ermitteln einer von der richtigen Richtung aus angeflogenen Landebahn (10, 12) unter Berücksichtigung der ermittelten räumlichen Abweichung (S14).

2. Verfahren nach Anspruch 1,
**dadurch gekennzeichnet, dass**
das Ermitteln der räumlichen Abweichung des Flugzeugs von den ermittelten Kontrollpunkten (14, 16) das Beurteilen des Treffens der Kontrollpunkte umfasst, wobei für die Beurteilung des Treffens eines Kontrollpunkts ein oder mehrere der folgenden Parameter verwendet werden: Ort, Geschwindigkeit, Gleitwinkel und/oder Sinkgeschwindigkeit des Flugzeugs.

3. Verfahren nach Anspruch 2,
**dadurch gekennzeichnet, dass**
die Kontrollpunkte (14, 16) mit Verringerung des Abstands zu einer Landebahn (10, 12) in immer kürzeren Abständen gesetzt sind und das Beurteilen des Treffens der Kontrollpunkte mit einer größeren Genauigkeit durchgeführt wird, je mehr sich der Abstand zur Landebahn verringert.

4. Verfahren nach Anspruch 1, 2 oder 3,
**dadurch gekennzeichnet, dass**
das Ermitteln der von der richtigen Richtung aus angeflogenen Landebahn unter Berücksichtigung der ermittelten räumlichen Abweichung das Auswerten von dreidimensional in einer Datenbank abgespeicherten Landeanflugwegen und davon abhängig das Auswählen der von der richtigen Richtung aus angeflogenen Landebahn umfasst.

5. Verfahren nach Anspruch 4,
**dadurch gekennzeichnet, dass**
beim Auswählen der von der richtigen Richtung aus angeflogenen Landebahn ferner Benutzereingaben berücksichtigt werden.

6. Computer-Programm ausgebildet zur Durchführung des Verfahrens nach einem der vorhergehenden Ansprüche.

7. Computer-Programm-Produkt beinhaltend einen maschinenlesbaren Programmträger, auf dem ein Computer-Programm gemäß Anspruch 6 in der Form von elektronisch und/oder optischen lesbaren Steuersignalen gespeichert ist.

8. Vorrichtung zum automatischen Ermitteln einer einer Landebahn, die zum Empfangen von Signalen von Kontrollpunkten ausgebildet ist und zum Ausführen eines Verfahrens nach den Ansprüche 1 bis 5 eingerichtet und zum Betrieb in einem Flugzeug ausgebildet ist.

## Claims

1. A method of automatically determining a landing runway (10, 12) in an airplane, the method comprising the following steps:
determining a plurality of control points (14, 16) situated along a landing approach of the airplane (18, 20, 22; S10), each of which is associated with a landing runway (10, 12) and configured as a signal transmitter, by receiving signals which are transmitted from the control points for identification and which set the correct approach path for the runway,
determining the spatial deviation of the aircraft (18, 20, 22) from the determined control points (14, 16; S12) by the signals transmitted from the control points containing the spatial coordinates of the control points and by determining the spatial deviation based on the own coordinates and the received coordinates, and
determining a landing runway (10, 12) approached from an appropriate direction based on the determined spatial deviation (S14).

2. The method according to claim 1,
**characterized in that**
determining the spatial deviation of the airplane from the determined control points (14, 16) comprises an evaluation of meeting the control points, wherein for the evaluation of meeting a control point one or more of the following parameters is/are used: location, speed, angle of approach and/or rate of descent of the airplane.

3. The method according to claim 2,
**characterized in that**
the control points (14, 16) are set at increasingly shorter distances from each other as the distance to a landing runway (10, 12) decreases and the evaluation of meeting a control point is performed with increasing accuracy as the distance to the landing runway decreases.

4. The method according to claim 1, 2 or 3
**characterized in that**
determining a landing runway approached from the appropriate direction based on the determined spatial deviation comprises evaluating landing approach paths that are three-dimensionally stored in a databank and, dependent thereon, selecting the landing runway (10, 12) approached from the appropriate direction.

5. The method according to claim 4,
**characterized in that**
upon selecting the landing runway (10, 12) approached from the appropriate direction user input is also taken into account.

6. A computer program product configured to execute the method according to anyone of the preceding claims.

7. A computer program product comprising a machine-readable program carrier encoded with a computer program according to claim 6 in the form of electronically and/or optically readable control signals.

8. A device for automatically determining a landing runway which is configured for receiving signals from control points and which is adapted to carry out a method according to anyone of claims 1 to 5 and which is configured for operation in an airplane.

## Revendications

1. Procédé de détermination automatique d'une piste d'atterrissage (10, 12) d'un avion, comprenant les étapes suivantes :
détermination de plusieurs points de contrôle (14, 16) le long d'une approche d'atterrissage de l'avion (18, 20, 22 ; S10), dont chacun est associé à une piste d'atterrissage (10, 12) et conçu comme un émetteur de signaux, par réception de signaux qui sont émis par les points de contrôle pour l'identification et définissent la trajectoire d'approche correcte de la piste d'atterrissage,
détermination de l'écart spatial de l'avion (18, 20, 22) par rapport aux points de contrôle déterminés (14, 16) par le fait que les signaux émis par les points de contrôle contiennent les coordonnées des points de contrôle dans l'espace et que l'écart spatial est déterminé à partir des coordonnées propres et des coordonnées des points de contrôle reçues, et
détermination d'une piste d'atterrissage (10, 12) approchée depuis la direction correcte en tenant compte de l'écart spatial (S14) déterminé.

2. Procédé selon la revendication 1,
**caractérisé en ce que** la détermination de l'écart spatial de l'avion par rapport aux points de contrôle déterminés (14, 16) comprend l'évaluation de l'atteinte des points de contrôle, un ou plusieurs des paramètres suivants étant utilisés pour évaluer l'atteinte d'un point de contrôle : la localisation, la vitesse, l'angle de descente et/ou la vitesse de descente de l'avion.

3. Procédé selon la revendication 2,
**caractérisé en ce que** les points de contrôle (14, 16) sont placés à des intervalles de plus en plus courts avec la diminution de la distance à une piste d'atterrissage (10, 12) et l'évaluation de l'atteinte des points de contrôle est effectuée avec une plus grande précision plus la distance à la piste d'atterrissage diminue.

4. Procédé selon la revendication 1, 2 ou 3,
**caractérisé en ce que** la détermination de la piste d'atterrissage approchée depuis la direction correcte en tenant compte de l'écart spatial déterminé comprend l'évaluation de trajectoires d'approche stockées en trois dimensions dans une base de données et, en fonction de celle-ci, la sélection de la piste d'atterrissage approchée depuis la direction correcte.

5. Procédé selon la revendication 4,
**caractérisé en ce que** des entrées d'utilisateur sont également prises en compte lors de la sélection de la piste d'atterrissage approchée depuis la direction correcte.

6. Programme d'ordinateur conçu pour mettre en oeuvre le procédé selon l'une des revendications précédentes.

7. Produit programme d'ordinateur contenant un support de programme lisible par machine sur lequel un programme d'ordinateur selon la revendication 6 est enregistré sous la forme de signaux de commande lisibles électroniquement et/ou optiquement.

8. Dispositif de détermination automatique d'une piste d'atterrissage, qui est conçu pour recevoir des signaux de points de contrôle, destiné à mettre en oeuvre le procédé selon les revendications 1 à 5 et à être utilisé dans un avion.
